# EUROPÄISCHE PATENTSCHRIFT

(11) **EP 0 993 900 B1**
(45) Veröffentlichungstag und Bekanntmachung des Hinweises auf die Patenterteilung: **17.12.2003**
(21) Anmeldenummer: 99120425.6
(22) Anmeldetag: 14.10.1999
(51) Int. Cl.: B23K 37/047

(54) **Vorrichtung zum Prüfen und Einrichten von Arbeitsstationen**
Device for the testing and setting of work stations
Dispositif de contrôle et de réglage de postes de travail

(30) Priorität: 16.10.1998 DE 29818337 U
(43) Veröffentlichungstag der Anmeldung: 19.04.2000
(73) Patentinhaber: KUKA Schweissanlagen GmbH, 86165 Augsburg (DE)
(72) Erfinder: Hansch, Dieter, 86830 Schwabmünchen (DE)
(74) Vertreter: Ernicke, Klaus Stefan

(56) Entgegenhaltungen:
- DE-U- 9 102 721
- DE-U- 29 712 348
- GB-A- 2 304 649

## Beschreibung

Die Erfindung betrifft eine Vorrichtung zum Prüfen und Einrichten von Arbeitsstationen mit den Merkmalen im Oberbegriff des Hauptanspruchs.

In der Praxis sind Produktionsanlagen mit ein oder mehreren Arbeitsstationen bekannt, in denen Werkstücke, insbesondere Rohkarosserien von Fahrzeugen, aus Bauteilen aufgebaut, gefügt, gespannt und bearbeitet, insbesondere geschweißt werden. Hierbei sind an den Arbeitsstationen ein oder mehrere Produktionspaletten im Einsatz, die verschiedene Werkzeuge, insbesondere Spann- aber auch Bearbeitungswerkzeuge, tragen und gegebenenfalls Werkstücke, z.B. Karosseriebauteile, zuführen. Derartige Produktionspaletten sind hochkomplexe Geräte, deren Entwicklung sehr eng mit der parallel laufenden Fahrzeugentwicklung gekoppelt ist. Bei der Einrichtung einer neuen Produktionsanlage bzw. ein oder mehrerer Arbeitsstationen oder bei der Einführung eines neuen Werkstücktypes besteht ein erhebliches Problem. Einerseits müssen die Arbeitsstationen und deren Peripherie eingerichtet und geprüft werden. Dies betrifft das Zusammenwirken der einzelnen Stationskomponenten untereinander und das Zusammenwirken mit der Produktionspalette und deren Teilen. Insbesondere geht es hier um das Einrichten und Prüfen von ein oder mehreren zur Arbeitsstation oder ihrer Peripherie gehörigen Steuerungen. Die an die Fahrzeugentwicklung gekoppelte Produktionspalette liegt in der fertigen Ausbauform in der Regel sehr spät und allenfalls kurz vor Produktionsbeginn vor. Die dann noch verbleibende Zeit zum Einrichten der Arbeitsstationen, deren Peripherie und der zugehörigen Steuerungen ist nur noch sehr kurz. Dies hat entweder einen verzögerten Produktionsbeginn oder erhebliche Anlaufprobleme bei der Produktion zur Folge.

Es ist Aufgabe der vorliegenden Erfindung, eine bessere Möglichkeit zum Prüfen und Einrichten der genannten Teile aufzuzeigen.

Die Erfindung löst diese Aufgabe mit den Merkmalen in den Hauptansprüchen 1 bzw. 2.
Anstelle der fertigen Produktionspalette kommt eine abgemagerte Prüfpalette zum Einsatz, die mit einer Simulationseinrichtung zur Nachbildung der Funktionen der echten Produktionspalette ausgerüstet ist. Durch diese Simulationseinrichtung können parallel zur Fahrzeug- und Palettenentwicklung die Komponenten der Arbeitsstation bzw. deren Peripherie und insbesondere die ein oder mehreren zugehörigen Steuerungen eingerichtet und geprüft werden. Insbesondere kann durch die simulierten Palettenfunktionen das Gesamtsystem im Zusammenspiel erprobt werden.

Durch die Prüfpalette können insbesondere Programmierungen des Gesamtsystems mit einem größeren verfügbaren Zeitrahmen durchgeführt werden. Dies betrifft z.B. die Programmierung der Liniensteuerung, der Transporttechniksteuerung, das Zusammenspiel mit der jeweiligen Steuerung der Bearbeitungsvorrichtungen, insbesondere der Robotersteuerungen, die Programmierung sämtlicher Verriegelungen, Schnittstellen zwischen der Liniensteuerung und der Transporttechniksteuerung usw. Von Vorteil ist ferner, daß die echte Produktionspalette so lange aus der Linie herausgehalten werden kann, bis die richtigen Bauteile verfügbar sind. Die Produktionspalette kann damit außerhalb der Fertigungslinie auf die Bauteile einjustiert werden und kommt somit als vollständige und geprüfte Produktionspalette in die Anlage. Die letzten Aktivitäten mit dieser Produktionspalette beschränken sich dann lediglich noch auf das Prüfen von Kollisionsproblemen, Geometrietreue der Schweißpunkte, Verifizierung der Taktzeit usw.

Die erfindungsgemäße Simulationseinrichtung besteht vorteilhafterweise aus ein oder mehreren programmierbaren Steuerungen, in denen die Funktionen der Palette und deren Teile in Abhängigkeit vom geplanten Produktionsablauf gespeichert sind. Hierbei ist es von Vorteil, wenn die Steuerung mehrere Programmspeicher für unterschiedliche Paletten- und Werkstücktypen aufweist. Dadurch ist die Prüfpalette mehrfach einsetzbar.

Die Prüfpalette ist bis auf die endgültige Werkzeug- oder Werkstückbelegung der echten Produktionspalette in den entscheidenden Punkten für das Zusammenspiel mit der Arbeitsstation und deren Teilen nachgebildet. Insbesondere hat die Prüfpalette die äußere Form, die mechanischen Schnittstellen und mindestens einen Anschluß für die Betriebsmittel gemäß der echten Produktionspalette.

In den Unteransprüchen sind weitere vorteilhafte Ausgestaltungen der Erfindung angeben.

Die Erfindung ist in den Zeichnungen beispielsweise und schematisch dargestellt. Im einzelnen zeigen
- Figur 1:: eine Draufsicht auf eine Arbeitsstation mit einer Prüfpalette und
- Figur 2:: eine vergrößerte Seitenansicht der Prüfpalette.

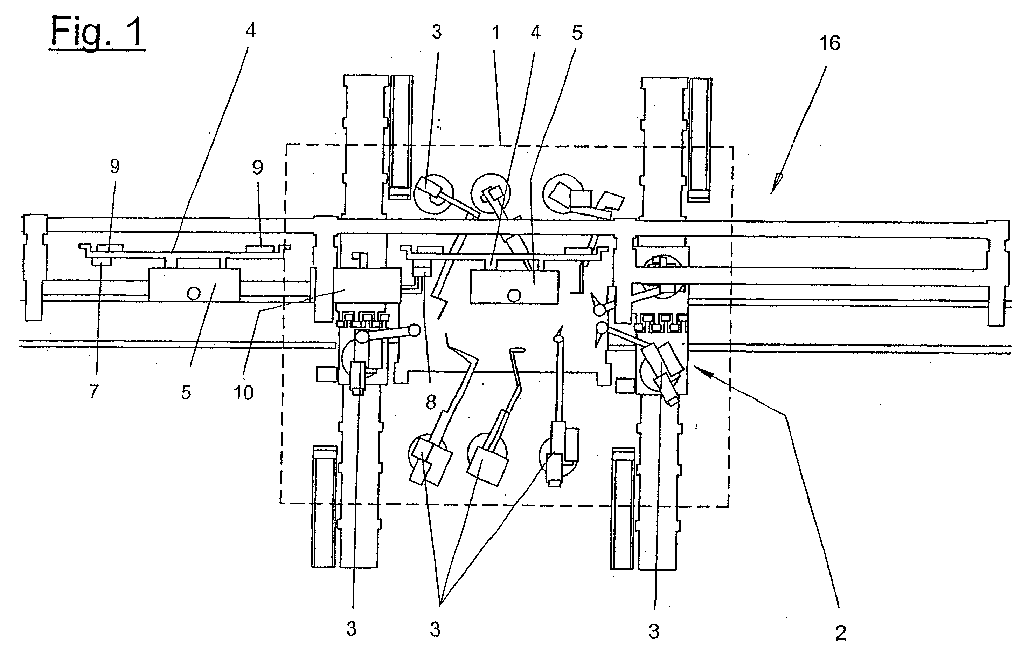

In Figur 1 ist eine Arbeitsstation (1) schematisch dargestellt, die in eine Transferlinie (16) integriert ist. An die gezeigte Arbeitsstation (1) können sich links und rechts weitere Arbeitsstationen anschließen. In der Transferlinie (16) werden Werkstücke bearbeitet. Hierbei handelt es sich vorzugsweise um Rohkarosserien von Kraftfahrzeugen, die in der Transferlinie (16) nach und nach aus Einzelteilen und Baugruppen aufgebaut und bearbeitet werden. Die Bearbeitungsvorgänge können beliebiger Natur sein. Insbesondere werden die einzelnen Werkstücke positioniert, gefügt, gespannt und geschweißt. Es können aber auch andere beliebige Bearbeitsvorgänge und auch Handhabungsvorgänge stattfinden. Hierfür sind ein oder mehrere Bearbeitungsvorrichtungen (3), z.B. mehrachsige Industrieroboter in der Arbeitsstation (1) vorgesehen.

Die Werkstücke werden durch eine nicht näher dargestellte Transportvorrichtung in die Arbeitsstation (1) gebracht und nach der Bearbeitung wieder weiter befördert. Die Transportvorrichtung kann beliebig ausgebildet sein, z.B. als Shuttle, Skid-Transport, Roboter-Transport oder dergleichen. Die Transportstrecke erstreckt sich vorzugsweise längs der Transferlinie (16).

Die Bearbeitung der nicht näher dargestellten Werkstücke .erfolgt mittels ein oder mehrerer Produktionspaletten (nicht dargestellt). Diese sind z.B. als Spannrahmen ausgebildet und haben ein oder mehrere Spannwerkzeuge, die speziell auf das Bauteil ausgerichtet sind. Zusätzlich können ein oder mehrere Bearbeitungswerkzeuge, z.B. Schweißwerkzeuge oder dergleichen an der Produktionspalette angeordnet sein. Auch Handhabungseinrichtungen, wie Transportarme, Greifköpfe oder dergleichen können vorhanden sein. Die Produktionspalette wird parallel mit den Werkstücken, insbesondere den Karosserieteilen, entwickelt. Hierbei laufen beide Entwicklungen parallel. Während dieser Synchronentwicklung soll die Arbeitsstation (1) bereits auf das oder die neuen Werkstücke eingerichtet und getestet werden. Dies ist vor allem der Fall bei der Neuinstallation und Ersteinrichtung einer Arbeitsstation (1). Gleiches gilt aber auch für die Einführung eines neuen Werkstücktyps, insbesondere eines neuen Karosserietyps, bei einer bestehenden Arbeitsstation (1) bzw. mehreren Arbeitsstationen innerhalb einer Transferlinie (16).

Zu diesem Zweck sieht die Erfindung eine Vorrichtung zum Prüfen und Einrichten der Arbeitsstation (1) vor, die ein oder mehrere Prüfpaletten (2) aufweist. Durch die Prüfpaletten (2) ist es möglich, die Entwicklung der Werkstücke und der Produktionspalette parallel zur Einrichtung und Prüfung der Arbeitsstationen (1) durchzuführen und dadurch erheblich Zeit zu sparen. Dabei geht es unter anderem um den Prozeßablauf innerhalb der Arbeitsstation (1) und insbesondere um die Einrichtung und Prüfung der Stationsteile, insbesondere der Bearbeitungsvorrichtungen bzw. Roboter (3) und weitere Komponenten sowie der zugehörigen Steuerungen (10,11). Die Arbeitsstation (1) hat z.B. eine eigene Steuerung für den Prozeßablauf innerhalb der Station. Desgleichen haben auch die Roboter (3) eigene Robotersteuerungen, die bereits vorzugsweise offline vorprogrammiert sind und dabei zumindest die groben Bewegungs- und Prozeßabläufe unter Berücksichtigung der Störabstände beinhalten. Zudem kann eine stationsübergreifende Liniensteuerung für die Transferlinie (16) vorhanden sein.

Die Produktionspaletten werden mit einer geeigneten Transporteinrichtung (5) in die Arbeitsstationen (1) hinein und wieder heraus transportiert. Diese Transporteinrichtung (5) kann in beliebig geeigneter Weise ausgebildet sein. Im gezeigten Ausführungsbeispiel handelt es sich um eine elektrisch angetriebene Einschienen-Hängebahn. Die Transporteinrichtung (5) kann zudem eine eigene Steuerung (11) aufweisen, die mit der externen Steuerung (10) der Arbeitsstation (1) bzw. deren Komponenten oder der Transferlinie (16) zusammenwirkt.

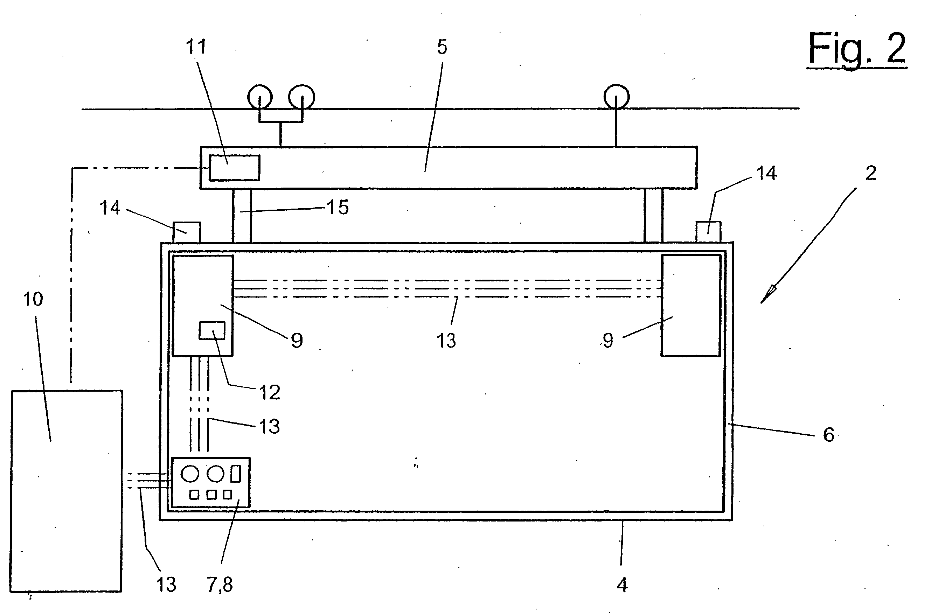

Die Prüfpalette (4) ist in Figur 2 näher dargestellt. Sie hat in den wesentlichen Punkten die äußere Form der echten Produktionspalette und besitzt dazu vorzugsweise ein entsprechend gestaltetes rahmenartiges Gestell (6). Die Prüfpalette (4) hat außerdem die der echten Produktionspalette entsprechenden mechanischen bzw. physikalischen Schnittstellen (14). Dies ist zum einen die gleiche Aufhängung (15) bzw. Verbindung zur Transporteinrichtung (5). Zu den Schnittstellen (14) gehören außerdem eine Zentriereinrichtung, Führungseinrichtungen, eine vorzugsweise berührungslos arbeitende Typerkennung für die Art der Palette und die Art des gegebenenfalls mitbewegten Werkstücks. Außerdem sind äußere Form und Größe der Paletten gleich. Im Zusammenwirken mit der Arbeitsstation (1) verhält sich die Prüfpalette (4) genauso wie die echte Produktionspalette.

Die Prüfpalette (4) hat allerdings nicht die endgültige Werkzeug- und Werkstückbelegung wie die echte Produktionspalette. Vorzugsweise hat die Prüfpalette (4) keine Werkzeuge und auch keine mitgeführten Werkstücke. Je nach Anwendungsfall ist es aber möglich, eine abgemagerte Teilbestückung an Werkzeugen und Werkstücken an der Prüfpalette (4) zu haben.

Die Prüfpalette (4) besitzt eine Simulationseinrichtung (2), die trotz fehlender Werkzeuge und Werkstücke die Funktionen der echten Produktionspalette simuliert. Diese Simulationseinrichtung (2) kann mit der oder den externen Steuerungen (10,11) der Arbeitsstation (1) bzw. der Transferlinie (16) oder der Stationskomponenten verbunden werden. Dies geschieht über einen oder mehrere Anschlüsse (7) an der Prüfpalette (4) für die Betriebsmittelversorgung. Über diesen Anschluß (7) können Steuersignale, Betriebsströme, Druckluft, Kühlwasser, Hydraulik und sonstige beliebige Betriebsmittel übertragen werden. Der oder die palettenseitigen Anschlüsse (7) wirken mit entsprechenden Gegenanschlüssen (8) an der Arbeitsstation (1) zusammen und können hier automatisch beim Einfahren der Palette in die Arbeitsstation (1) angedockt werden.

Die Simulationseinrichtung (2) besteht vorzugsweise aus ein oder mehreren Steuerungen (9), die vorzugsweise als Ablaufsteuerungen ausgebildet sind und die die Palettenfunktionen nachbilden. Die Steuerungen (9) sind frei programmierbar und haben jeweils ein oder mehrere Daten- und Programmspeicher. Sie können mehrere Ablaufprogramme für unterschiedliche Werkstücktypen und unterschiedliche Produktionspalettentypen speichern. Mit einer Prüfpalette (4) können dadurch verschiedene dieser Typen simuliert werden. Die Steuerungen (9) können konstruktiv in beliebig geeigneter Weise ausgebildet sein. Zum Beispiel handelt es sich um rechnerbasierte Steuerungen mit ein oder mehreren Mikroprozessoren, den zugehörigen permanenten und flüchtigen Speichern und den zugehörigen Schnittstellen für Ein- und Ausgabe der Daten.

Die Steuerungen können zudem zusätzliche Peripherieeinheiten besitzen. Dies können z.B. ein oder mehrere Zeitglieder sein, die hardware- oder softwaremäßig ausgebildet sind und die Zeiteffekte, insbesondere Verzögerungen, bei der Funktion der echten Produktionspalette simulieren. Außerdem können ein oder mehrere Eingabevorrichtungen (12) zur manuellen oder maschinellen Eingabe von Signalen oder Befehlen vorhanden sein. Dies können z.B. ein mechanischer Quittungsschalter oder ein Empfänger für drahtlose Datenübertragung, z.B. per Infrarot, sein. Hierdurch kann eine Stationskomponente ein Quittungssignal für die Beendigung eines Bearbeitungsvorgangs an die Steuerung (9) melden. Alternativ oder zusätzlich kann z.B. auch eine Bedienungsperson ein Quittungssignal oder ein sonstiges Steuersignal geben, indem z.B. die Beendigung eines manuellen Beladevorgangs innerhalb der Arbeitsstation (1) gemeldet wird. Ferner können über die Eingabevorrichtungen (12) beliebige externe Daten in geeigneter Weise an die Steuerung (9) gemeldet werden, indem z.B. auch eine Simulation von Bauteilmeldern durchgeführt wird.

Die Steuerungen (9) simulieren im Zusammenspiel mit der Arbeitsstation (1) bzw. den externen Steuerungen (10,11) unterschiedliche Palettenfunktionen. Dies kann z.B. die Funktion von Spann- oder Zentrierelementen an der echten Produktionspalette sein. Wenn die externe Steuerung (10) den Befehl zum Öffnen eines Spanners an die Steuerung (9) übermittelt, gibt die Steuerung (9), gegebenenfalls mit einer der Echtfunktion entsprechenden zeitlichen Verzögerung, ein Vollzugssignal zurück. Alternativ zum Testen der Fehlroutinen kann auch ein Fehler- oder Störsignal zurückgemeldet werden. In ähnlicher Weise können von der Steuerung (9) auch die Funktionen von Bewegungseinheiten für die Handhabung von Werkzeugen und Werkstücken an der echten Produktionspalette simuliert werden. Zu den nachbildbaren Palettenfunktionen gehört auch die Sensortechnik, die generell die Vorgänge Messen, Schalten, Prüfen und Informieren umfaßt. Hierüber werden z.B. Sensorfunktionen zur Überwachung von Prozeßabläufen, z.B. Schweißnahtgüte etc. simuliert. Simulationsfähig sind auch Positionsmeldungen über die korrekte Einlegeposition von Werkstückteilen, die Einnahme der Arbeitsstellung von Werkzeugen etc.. Zu den simulierfähigen Palettenfunktionen gehören auch die Funktionen der Bearbeitungswerkzeuge an der echten Produktionspalette, z.B. die Funktion von Laserschweißköpfen, Punktschweißzangen etc.. Simuliert werden kann generell der Signal- und Informationsaustausch zwischen den verschiedenen Bestandteilen der echten Produktionspalette und der oder den externen Steuerungen (10,11).

In diese Simulation der Palettenfunktionen können auch die anderen Betriebsmittel einbezogen werden, für die die Anschlüsse (7,8) vorgesehen sind. In der bevorzugten Ausführungsform ist der palettenseitige Anschluß (7) blind geschaltet. Dadurch kann z.B. Hydraulik- oder Luftdruck von der externen Versorgung an der Arbeitsstation (1) anstehen. Alternativ kann auch ein simulierender-Verbraucher an der Prüfpalette (4) vorhanden sein. Desgleichen können je nach Betriebsmittel die Anschlüsse (7) auch offen sein.

### BEZUGSZEICHENLISTE

- 1: Arbeitsstation
- 2: Simulationseinrichtung
- 3: Bearbeitungsvorrichtung, Roboter
- 4: Prüfpalette
- 5: Transporteinrichtung
- 6: Gestell, Rahmen
- 7: Anschluß Palette
- 8: Gegenanschluß Arbeitsstation
- 9: Steuerung Simulationseinrichtung
- 10: Steuerung extern (Arbeitsstation, Prozeß etc.)
- 11: Steuerung Transporteinrichtung
- 12: Eingabevorrichtung
- 13: Leitung
- 14: Schnittstelle mechanisch
- 15: Aufhängung
- 16: Transferlinie

## Patentansprüche

1. Verfahren zum Prüfen und Einrichten von Arbeitsstationen (1), deren Peripherie und ein oder mehreren zugehörigen Steuerungen (10,11), bei denen ein oder mehrere Paletten mit Werkzeugen und gegebenenfalls mit Werkstücken zugeführt werden, **dadurch gekennzeichnet, daß** eine Prüfpalette (4) ohne endgültige Werkzeug- und Werkstückbelegung und mit einer Simulationseinrichtung (2) zugeführt wird, die mit der oder den Steuerungen (10,11) an der Arbeitsstation (1) verbunden wird und die die Funktionen der echten Produktionspalette simuliert.

2. Vorrichtung zum Prüfen und Einrichten von Arbeitsstationen (1), deren Peripherie und ein oder mehreren zugehörigen Steuerungen (10,11), bei denen ein oder mehrere Paletten mit Werkzeugen und gegebenenfalls mit Werkstücken zugeführt werden, **dadurch gekennzeichnet, daß** die Vorrichtung eine Prüfpalette (4) ohne endgültige Werkzeug- und Werkstückbelegung und mit einer Simulationseinrichtung (2) aufweist, die mit der oder den Steuerungen (10,11) an der Arbeitsstation (1) verbindbar ist und Funktionen der echten Produktionspalette simuliert.

3. Vorrichtung nach Anspruch 2, **dadurch gekennzeichnet, daß** die Prüfpalette (4) die äußere Form, die mechanischen Schnittstellen (14) und mindestens einen Anschluß (7) für die Betriebsmittel entsprechend der echten Produktionspalette besitzt.

4. Vorrichtung nach Anspruch 2 oder 3, **dadurch gekennzeichnet, daß** die Simulationseinrichtung (2) mindestens eine mit dem Anschluß (7) verbindbare programmierbare Steuerung (9) aufweist.

5. Vorrichtung nach Anspruch 2, 3 oder 4, **dadurch gekennzeichnet, daß** die Steuerung (9) einen Speicher für mehrere Programme und Betriebsdaten von unterschiedlichen Paletten- und Werkstücktypen aufweist.

6. Vorrichtung nach einem der Ansprüche 2 bis 5, **dadurch gekennzeichnet, daß** die Steuerung (9) ein oder mehrere Zeitglieder zur Nachbildung von Zeitfunktionen aufweist.

7. Vorrichtung nach einem der Ansprüche 2 bis 6, **dadurch gekennzeichnet, daß** die Steuerung (9) ein oder mehrere Eingabevorrichtungen (12) zur manuellen oder maschinellen Eingabe von Signalen oder Befehlen aufweist.

8. Vorrichtung nach einem der Ansprüche 2 bis 7, **dadurch gekennzeichnet, daß** die Steuerung (9) als Ablaufsteuerung ausgebildet ist.

## Claims

1. Method of checking and setting up workstations (1), their periphery and one or more associated controllers (10, 11), in which one or more pallets with tools and possibly with workpieces are supplied, **characterized in that** a test pallet (4) without a final tool and workpiece population and with a simulation device (2) is supplied, which is connected to the controller or controllers. (10, 11) at the workstation (1) and simulates the functions of the real production pallet.

2. Apparatus for checking and setting up workstations (1), their periphery and one or more associated controllers (10, 11), in which one or more pallets with tools and possibly with workpieces are supplied, **characterized in that** the apparatus comprises a test pallet (4) without a final tool and workpiece population and with a simulation device (2), which is connected to the controller or controllers (10, 11) at the workstation (1) and simulates the functions of the real production pallet.

3. Apparatus according to Claim 2, **characterized in that** the test pallet (4) has the external shape, the mechanical interfaces (14) and at least one connection (7) for the operating means corresponding to the real production pallet.

4. Apparatus according to Claim 2 or 3, **characterized in that** the simulation device (2) comprises at least one programmable controller (9) which can be connected to the connection (7).

5. Apparatus according to Claim 2, 3 or 4, **characterized in that** the controller (9) has a memory for a plurality of programs and operating data from different pallet and workpiece types.

6. Apparatus according to one of Claims 2 to 5, **characterized in that** the controller (9) has one or more timing elements for simulating timing functions.

7. Apparatus according to one of Claims 2 to 6, **characterized in that** the controller (9) has one or more input devices (12) for the manual or machine input of signals or commands.

8. Apparatus according to one of Claims 2 to 7, **characterized in that** the controller (9) is constructed as a sequence controller.

## Revendications

1. Procédé de contrôle et de réglage de postes de travail (1) , de leur périphérie et d'une ou de plusieurs commandes associées (10, 11), dans lesquels on envoie une ou plusieurs palettes avec des outils et le cas échéant des pièces, **caractérisé en ce que** l'on envoie une palette de contrôle (4) sans son équipement définitif d'outils et de pièces et avec un dispositif de simulation (2), qui est relié à la ou aux commandes (10, 11) du poste de travail (1) et qui simule les fonctions de la véritable palette de production.

2. Dispositif de contrôle et de réglage de postes de travail (1), de leur périphérie et d'une ou de plusieurs commandes associées (10, 11), dans lesquels une ou plusieurs palettes avec des outils et le cas échéant des pièces sont envoyées, **caractérisé en ce que** le dispositif présente une palette de contrôle (4) sans son équipement définitif d'outils et de pièces et avec un dispositif de simulation (2), qui peut être relié à la ou aux commandes (10, 11) du poste de travail (1) et qui simule les fonctions de la véritable palette de production.

3. Dispositif selon la revendication 2, **caractérisé en ce que** la palette de contrôle (4) possède la forme extérieure, les interfaces mécaniques (14) et au moins un connecteur (7) pour les moyens de fonctionnement, qui correspondent à la véritable palette de production.

4. Dispositif selon la revendication 2 ou 3, **caractérisé en ce que** le dispositif de simulation (2) présente au moins une commande programmable (9) pouvant être reliée au connecteur (7).

5. Dispositif selon la revendication 2, 3 ou 4, **caractérisé en ce que** la commande (9) présente une mémoire pour plusieurs programmes et données de fonctionnement de différents types de palettes et de pièces.

6. Dispositif selon l'une quelconque des revendications 2 à 5, **caractérisé en ce que** la commande (9) présente un ou plusieurs systèmes temporisés pour la simulation de fonctions temporelles.

7. Dispositif selon l'une quelconque des revendications 2 à 6, **caractérisé en ce que** la commande (9) présente un ou plusieurs dispositifs d'entrée (12) pour l'entrée manuelle ou mécanisée de signaux ou d'instructions.

8. Dispositif selon l'une quelconque des revendications 2 à 7, **caractérisé en ce que** la commande (9) a la forme d'une commande séquentielle.
